# EUROPÄISCHE PATENTSCHRIFT

(11) **EP 2 096 344 B1**
(45) Veröffentlichungstag und Bekanntmachung des Hinweises auf die Patenterteilung: **16.02.2011**
(21) Anmeldenummer: 09002719.4
(22) Anmeldetag: 26.02.2009
(51) Int. Cl.: F16K 31/44, F24D 19/10

(54) **Heizkörperthermostat mit einem Stelltrieb**
Heater thermostat with an actuator
Thermostat de radiateur doté d'un actionneur

(30) Priorität: 01.03.2008 DE 102008012157
(43) Veröffentlichungstag der Anmeldung: 02.09.2009
(73) Patentinhaber: ista International GmbH, 45131 Essen (DE)
(72) Erfinder: Mügge, Günter, Dr.-Ing., 48159 Münster (DE); Niederfeld, Gerhard, Dipl.-Ing., 45131 Essen (DE)
(74) Vertreter: DR. STARK & PARTNER

(56) Entgegenhaltungen:
- DE-A1- 2 539 371
- DE-A1- 3 045 399
- DE-A1- 3 515 590
- US-A- 3 466 005

## Beschreibung

Die Erfindung betrifft einen Heizkörperthermostaten mit einem Stelltrieb für die Stellbewegung des Ventils eines Heizkörpers und mit einem den Stelltrieb steuernden Auslöser oder dergleichen.

Aus der Praxis sind derartige Heizkörperthermostate bekannt, bei denen ein Ausdehnungselement die Funktion des Reglers und auch des Stelltriebs verwirklicht. Nachteilig hierbei ist, dass lediglich eine zeitlich gekoppelte Verstellung des Stelltriebs erfolgen kann und somit eine zeitgesteuerte Vorgabe des Sollwertes und/oder aber eine Steuerung durch ein EDV-System, wie z. B. ein übergeordnetes Gebäudeleitsystem, nicht oder nur mit erhöhtem Aufwand möglich ist.

Darüber hinaus sind Heizkörperthermostate bekannt, die beispielsweise über einen elektrisch betriebenen Stelltrieb mit einem Motor verfügen.

Nachteilig hierbei ist, dass insoweit eine Energiequelle erforderlich ist, durch die der Stelltrieb betrieben werden kann. Sofern die Energie dieser Energiequelle verbraucht ist, kann keine Ventilverstellung durch den Stelltrieb mehr erfolgen. Damit müssen aufgrund des recht hohen Energiebedarfs eines solchen elektrisch betriebenen Stelltriebs für eine sichere Betriebssituation die Energiequellen solcher Stelltriebe in bestimmten Intervallen getauscht werden, selbst wenn sie noch nicht vollständig erschöpft sind. Dies bedingt neben den wenig ökologisch anfallenden, nicht vollständig entleerten Energiequellen auch zusätzliche Servicekosten für den jeweiligen Austausch und ist somit auch ökonomisch nicht wünschenswert.

Aus der DE 30 45 399 A1 ist ein Thermostatventil für Heizkörper von Warmwasserheizungen bekannt, bei dem das Schließorgan zusätzlich und unabhängig vom thermostatischen Regelorgan von einem drehbeweglichen Schaltorgan in Schließstellung bringbar ist, wobei das Schaltorgan von einem mechanischen Kraftspeicher drehend angetrieben ist, welcher von einem thermostatischen Arbeitselement mit zumindest einer Bimetall-Spirale schrittweise nachgespannt wird.

In der US 3 466 005 A wird ein ferngesteuertes Ventil beschrieben, welches einen elektrischen Auslöser aufweist.

Aufgabe der Erfindung ist es insoweit, die vorgenannten Nachteile zu vermeiden und einen Heizkörperthermostaten anzugeben, mit dem jederzeit ein sicherer Betrieb des Stelltriebs möglich ist.

Diese Aufgabe wird dadurch gelöst, dass der Stelltrieb einen Bewegungserzeuger und zumindest eine die von dem Bewegungserzeuger in zumindest einer Bewegungsrichtung erzeugte Bewegung zunächst speichernde Bewegungsspeichereinrichtung umfasst, wobei als Bewegungserzeuger ein bei schwankenden Raumtemperaturen seine Form durch Ausdehnen bzw. Zusammenziehen verändernder und zumindest ein freies Ende aufweisender Dehnungskörper vorgesehen ist, dessen freies Ende mit der/den Bewegungsspeichereinrichtung(en) zur Speicherung der Bewegung in der Bewegungsspeichereinrichtung selbst bei anschließend umgekehrter Formänderung des Dehnungskörpers zusammenwirkend ausgebildet ist.

Damit sowohl die Bewegung bei einem Anstieg als auch bei einer Abfallen der Raumtemperatur gespeichert werden kann, weist der Stelltrieb hierfür eine zweite Bewegungsspeichereinrichtung zur Speicherung der von dem Bewegungserzeuger in einer zweiten Bewegungsrichtung erzeugten Bewegung auf.

Hierdurch wird ein sicherer Betrieb des Heizkörperthermostaten ermöglicht, da die Randbedingung, nämlich das Schwanken der Raumtemperatur, die ein Nachregeln durch Verstellen des Stelltriebs erforderlich machen, gleichzeitig die erforderliche Betätigungsenergie des Stelltriebs in Form von Bewegung zur Verfügung stellt.

Vorzugsweise kann die Bewegungsspeichereinrichtung ein Federelement zur Speicherung der Bewegung aufweisen, so dass die Bewegungsspeicherung mit einfachen technischen Mitteln erfolgt und auch eine deutlich zeitlich verzögerte Betätigung des Stelltriebs möglich ist.

Erfindungsgemäß kann zumindest eine erste Sperrklinke oder dergleichen zur Speicherung der Bewegung in der Bewegungsspeichereinrichtung selbst bei anschließend umgekehrter Formänderung des Dehnungskörpers vorgesehen sein, so dass mit einfachen technischen Mitteln eine verlässliche und wenig störanfällige Speicherung der Bewegung nach dem Ratschen-Prinzip möglich ist.

Vorteilhafterweise kann eine Umlenkeinrichtung und zumindest eine weitere, entgegengesetzt der ersten Sperrklinke oder dergleichen wirkende zweite Sperrklinke oder dergleichen zur Speicherung der Bewegung in der Bewegungsspeichereinrichtung auch bei umgekehrter Formänderung des Dehnungskörpers in der Bewegungsspeichereinrichtung vorgesehen sein, so dass sowohl die Bewegung bei einem Anstieg als auch bei einer Abfallen der Raumtemperatur gespeichert werden kann.

Bei einem bevorzugten Ausführungsbeispiel der Erfindung kann der Auslöser als ein elektromagnetisch die Bewegungsspeichereinrichtung zur Steuerung des Ventils freigebender Auslöser ausgebildet sein, so dass auch mit einer kleinen Energiequelle eine sehr lange Betriebsdauer realisierbar ist.

Alternativ kann auch ein elektrischer Antrieb vorgesehen sein, der zur Einsparung von elektrischer Energie zumindest in einer Bewegungsrichtung, insbesondere in der einen erhöhten Kraftaufwand erfordernden Bewegungsrichtung für das Öffnen des Ventils, durch die gespeicherte Bewegungsenergie unterstützt wird.

Im Folgenden werden in der Zeichnung dargestellte Ausführungsbeispiele der Erfindung erläutert. Es zeigen:
- Fig. 1: eine Prinzipskizze eines ersten Ausführungs- beispieles eines erfindungsgemäßen Heizkörper- thermostaten,
- Fig. 2: eine Prinzipskizze eines zweiten Ausführungs- beispieles eines erfindungsgemäßen Heizkörper- thermostaten und

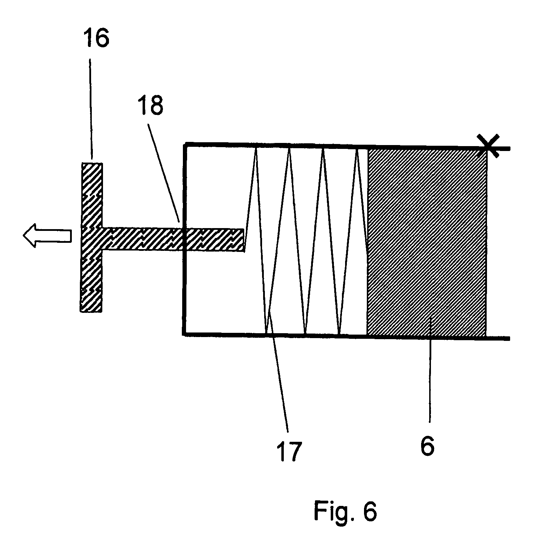

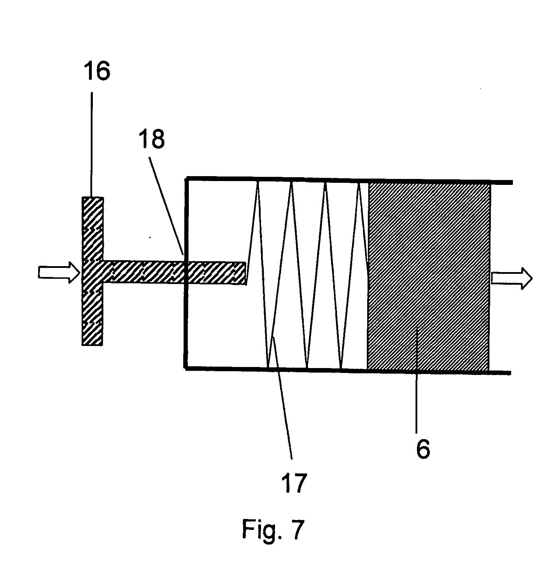

- Fig. 3 - 7: Detailansichten des Bewegungserzeugers eines erfindungsgemäßen Heizkörperthermostaten in unterschiedlichen Positionen.

In allen Figuren werden für gleiche bzw. gleichartige Bauteile übereinstimmende Bezugszeichen verwendet.

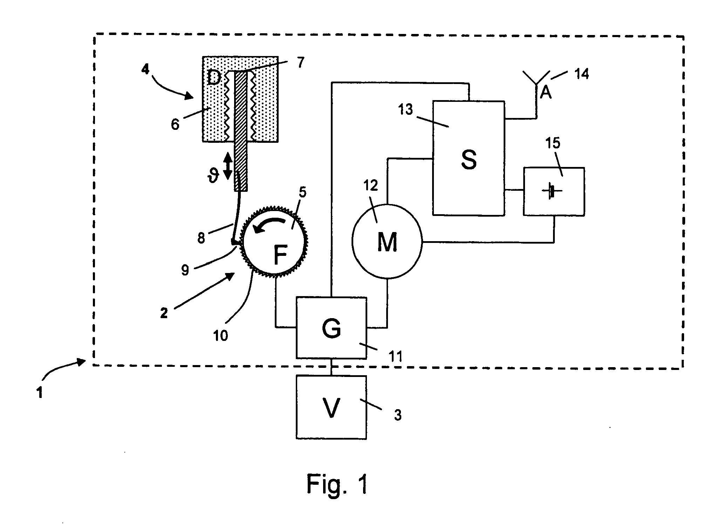

Fig. 1 zeigt in schematischer Darstellung einen Heizkörperthermostaten 1, welcher einen Stelltrieb 2 für die Stellbewegung des Ventils 3 eines in der Zeichnung nicht dargestellten Heizkörpers umfasst.

Der Stelltrieb 2 beinhaltet einen Bewegungserzeuger 4 und eine die von dem Bewegungserzeuger 4 erzeugte Bewegung zunächst speichernde Bewegungsspeichereinrichtung 5.

Dabei umfasst der Bewegungserzeuger 4 einen bei schwankenden Raumtemperaturen seine Form durch Ausdehnen bzw. Zusammenziehen verändernden Dehnungskörper 6, welcher ein freies Ende 7 aufweist, das mit der Bewegungsspeichereinrichtung 5 derart zusammenwirkend ausgebildet ist, dass die durch den Bewegungserzeuger 4 erzeugte Bewegung selbst bei anschließend umgekehrter Formänderung des Dehnungskörpers 6 gespeichert ist und bleibt.

Im vorliegenden Ausführungsbeispiel ist die Bewegungsspeichereinrichtung 5 als ein Federwerk ausgebildet, welches über einen Stößel 8 nur in eine Richtung (Aufziehrichtung) bewegt werden kann, wohingegen der Stößel 8 bedingt durch die Form der Stößelnase 9 und die Form der Zähne 10 des Federwerks bei Bewegung in der anderen Richtung "durchrutscht". Somit erfolgt die Bewegungsspeicherung analog dem Aufziehen einer Handaufzugsuhr.

An die Bewegungsspeichereinrichtung 5 schließt sich ein Getriebe 11 an, welches weiterhin mit einem Elektromotor 12 oder alternativ mit einem elektrothermischen oder elektrochemischen Aktor sowie einer Steuereinrichtung 13 verbunden ist. Weiterhin sind mit der Steuereinrichtung 13 eine Antenne 14 sowie eine Energiequelle 15, die auch den Motor 12 mit Energie versorgt, verbunden.

Das Getriebe 11 kann zwischen den Antriebsquellen Motor 12 und/oder Bewegungsspeichereinrichtung 5 umgeschaltet werden, wobei auch eine Einstellung für einen gemeinsamen Antrieb durch die Bewegungsspeichereinrichtung 5 und den Motor 12 möglich ist.

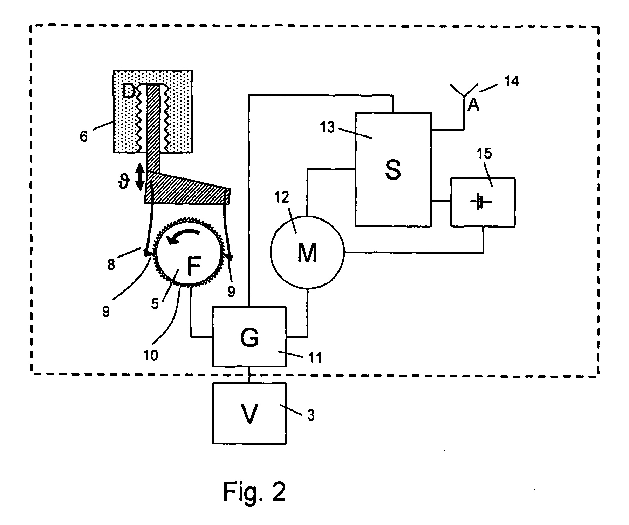

Fig. 2 zeigt ein alternatives Ausführungsbeispiel eines erfindungsgemäßen Heizkörperthermostaten 1, bei dem die Bewegungsspeichereinrichtung 5 bei Auslenkung des Bewegungserzeugers 4 in beide Richtungen durch einen Stößel 8 mit zwei Stößelnasen 9 erfolgt.

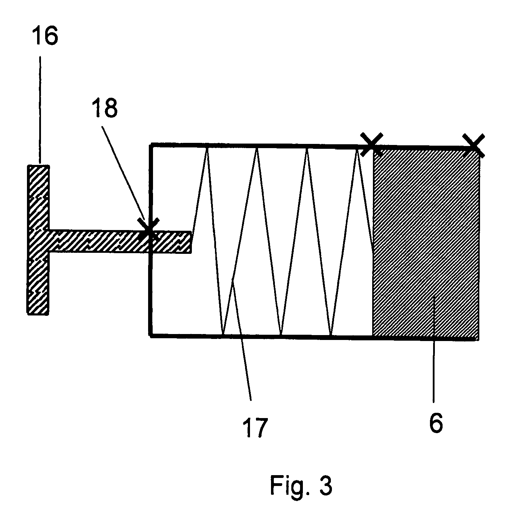

Fig. 3 zeigt den Bewegungserzeuger 4 eines weiteren Ausführungsbeispiels eines erfindungsgemäßen Heizkörperthermostaten 1 im Detail, wobei der Dehnungskörper 6 noch nicht ausgedehnt ist. Zwischen dem Dehnungskörper 6 und einem mit einem in der Zeichnung nicht dargestellten Ventil zusammenwirkenden Ventilstößel 16 ist ein Federelement 17 vorgesehen. Der Ventilstößel 16 ist durch einen Auslöser 18 arretiert.

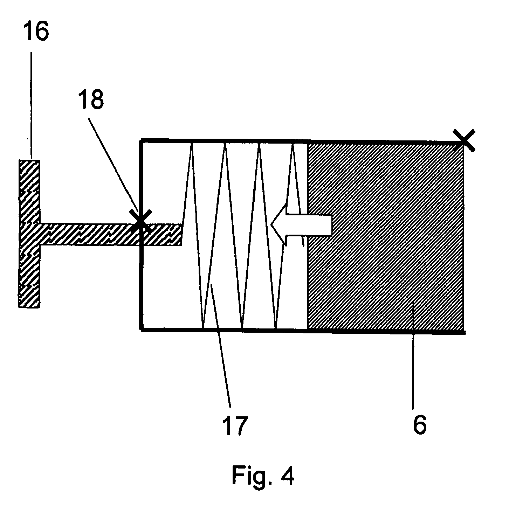

In Fig. 4 hat sich durch Temperaturerhöhung der Dehnungskörper 6 ausgedehnt und erstreckt sich aufgrund seiner Arretierung an der linken Seite nunmehr in Richtung des Ventilstößels 16. Da der Ventilstößel durch den Auslöser 18 ebenfalls arretiert ist, wird das Federelement 17 zusammengedrückt.

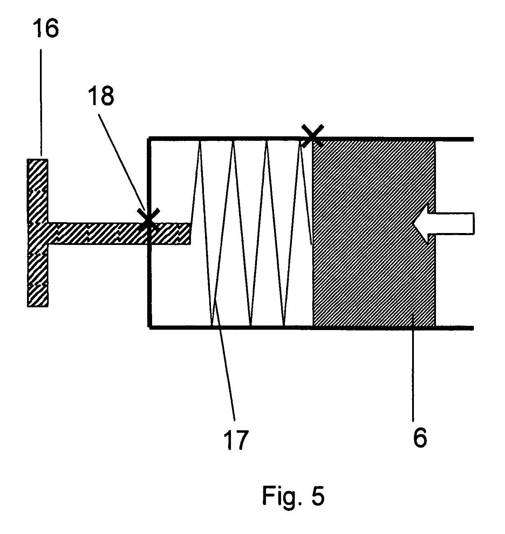

Nunmehr erfolgt gemäß Fig. 5 eine Arretierung der stößelseitigen Seite des Dehnungskörpers 6, so dass bei Absinken der Temperatur das Zusammenziehen des Dehnungskörpers 6 die Stauchung des Federelements 17 nicht beeinflusst.

Durch Freigabe mittels des Auslösers 18 wird der Ventilstößel 16 durch das Federelement 17 verlagert. Dies kann je nach Ausgestaltung zum Öffnen oder zum Schließen des Ventils dienen.

Später kann durch Freigabe der Arretierung des Dehnungskörpers 6 und Freigabe des Auslösers 18 des Ventilsstößels 16freigegeben werden, der dann durch Innendruck oder eine zusätzlich vorgesehene Feder in seine ursprüngliche Position verlagert wird. Dies kann dann je nach Ausgestaltung zum Schließen oder zum Öffnen des Ventils dienen.

## Patentansprüche

1. Heizkörperthermostat (1) mit einem Stelltrieb (2) für die Stellbewegung des Ventils (3) eines Heizkörpers und mit einem den Stelltrieb (2) steuernden Auslöser (18) oder dergleichen, wobei der Stelltrieb (2) einen Bewegungserzeuger (4) und zumindest eine die von dem Bewegungserzeuger (4) in zumindest einer Bewegungsrichtung erzeugte Bewegung zunächst speichernde Bewegungsspeichereinrichtung (5) umfasst, wobei als Bewegungserzeuger (4) ein bei schwankenden Raumtemperaturen seine Form durch Ausdehnen bzw. Zusammenziehen verändernder und zumindest ein freies Ende aufweisender Dehnungskörper (6) vorgesehen ist, dessen freies Ende (7) mit der/den Bewegungsspeichereinrichtung(en) (5) zur Speicherung der Bewegung in der Bewegungsspeichereinrichtung (5) selbst bei anschließend umgekehrter Formänderung des Dehnungskörpers (6) zusammenwirkend ausgebildet ist, **dadurch gekennzeichnet, dass** der Stelltrieb (2) weiterhin eine zweite Bewegungsspeichereinrichtung (5) zur Speicherung der von dem Bewegungserzeuger (4) in einer zweiten Bewegungsrichtung erzeugte Bewegung aufweist.

2. Heizkörperthermostat (1) nach dem vorhergehenden Anspruch, **dadurch gekennzeichnet, dass** zumindest eine Bewegungsspeichereinrichtung (5) ein Federelement (17) zur Speicherung der Bewegung aufweist.

3. Heizkörperthermostat (1) nach einem der vorhergehenden Ansprüche, **dadurch gekennzeichnet, dass** zumindest eine erste Sperrklinke oder dergleichen zur Speicherung der Bewegung in der Bewegungsspeichereinrichtung (5) selbst bei anschließend umgekehrter Formänderung des Dehnungskörpers (6) vorgesehen ist.

4. Heizkörperthermostat (1) nach dem vorhergehenden Anspruch, **dadurch gekennzeichnet, dass** eine Umlenkeinrichtung und zumindest eine weitere, entgegengesetzt der ersten Sperrklinke oder dergleichen wirkende zweite Sperrklinke oder dergleichen zur Speicherung der Bewegung in der Bewegungsspeichereinrichtung (5) auch bei umgekehrter Formänderung des Dehnungskörpers (6) in der Bewegungsspeichereinrichtung (5) vorgesehen ist.

5. Heizkörperthermostat (1) nach einem der vorhergehenden Ansprüche, **dadurch gekennzeichnet, dass** der Auslöser (18) als ein elektromagnetisch die Bewegungsspeichereinrichtung (5) zur Steuerung des Ventils (3) freigebender Auslöser (18) ausgebildet ist.

## Claims

1. Heater thermostat (1) having an actuator (2) for the adjusting movement of the valve (3) of a heater and having a triggering means (18) or the like controlling the actuator (2), wherein the actuator (2) includes a movement generating means (4) and at least one movement storage device (5), which initially stores the movement generated in at least one direction of movement by the movement generating means (4), wherein an expansion body (6) is provided as the movement generating means (4), said expansion body altering its shape by means of expanding or collapsing when ambient temperatures oscillate and including at least one free end, the free end (7) of said expansion body is realized so as to interact with the movement storage device or devices (5) for storing the movement in the movement storage device (5) even during a subsequent reverse shape change of the expansion body (6), **characterized in that** the actuator (2) additionally has a second movement storage device (5) for storing the movement generated in a second direction of movement by the movement generating means (4).

2. Heater thermostat (1) according to the preceding claim, **characterized in that** at least one movement storage device (5) has a resilient element (17) for storing the movement.

3. Heater thermostat (1) according to one of the preceding claims, **characterized in that** at least one first locking pawl or the like is provided for storing the movement in the movement storage device (5) even during a subsequent reverse shape change of the expansion body (6).

4. Heater thermostat (1) according to one of the preceding claims, **characterized in that** a guide device and at least one further second locking pawl or the like, which acts in an opposite manner to the first locking pawl or the like, is provided in the movement storage device (5) for storing the movement in the movement storage device (5) even during a subsequent reverse shape change of the expansion body (6).

5. Heater thermostat (1) according to one of the preceding claims, **characterized in that** the triggering means (18) is realized as a triggering means (18) that releases the movement storage device (5) in an electromagnetic manner to control the valve (3).

## Revendications

1. Thermostat de radiateur (1) avec un actionneur (2) pour le mouvement de réglage du robinet (3) d'un radiateur et avec un déclencheur (18) ou analogue qui commande l'actionneur (2), l'actionneur (2) comprenant un générateur de déplacement (4) et au moins un dispositif de mémorisation de mouvement (5) qui mémorise dans un premier temps au moins un mouvement généré par le générateur de mouvement (4) dans au moins un sens de déplacement, un corps de dilatation (6) changeant de forme par dilatation ou contraction selon les variations de la température ambiante et présentant au moins une extrémité libre étant prévu comme générateur de mouvement (4), son extrémité libre (7) étant conçue pour coopérer avec le(s) dispositif(s) de mémorisation de mouvement (5) pour mémoriser le mouvement dans le dispositif de mémorisation de mouvement (5) même en cas de changement de forme inverse ultérieur du corps de dilatation (6), **caractérisé en ce que** l'actionneur (2) présente en outre un deuxième dispositif de mémorisation de mouvement (5) pour mémoriser le mouvement généré par le générateur de mouvement (4) dans un deuxième sens de déplacement.

2. Thermostat de radiateur (1) selon la revendication précédente, **caractérisé en ce qu'**au moins un dispositif de mémorisation de mouvement (5) présente un élément à ressort (17) pour mémoriser le mouvement.

3. Thermostat de radiateur (1) selon une des revendications précédentes, **caractérisé en ce qu'**il est prévu au moins un premier cliquet d'arrêt ou analogue pour mémoriser le mouvement dans le dispositif de mémorisation de mouvement (5) même en cas de changement de forme inverse ultérieur du corps de dilatation (6).

4. Thermostat de radiateur (1) selon la revendication précédente, **caractérisé en ce qu'**il est prévu dans le dispositif de mémorisation de mouvement (5) un dispositif de déviation et au moins un deuxième cliquet d'arrêt ou analogue agissant en sens contraire du premier cliquet d'arrêt ou analogue pour mémoriser le mouvement dans le dispositif de mémorisation de mouvement (5) même en cas de changement de forme inverse du corps de dilatation (6).

5. Thermostat de radiateur (1) selon une des revendications précédentes, **caractérisé en ce que** le déclencheur (18) est réalisé sous la forme d'un déclencheur (18) libérant par voie électromagnétique le dispositif de mémorisation de mouvement (5) pour la commande du robinet (3).
